# EUROPÄISCHE PATENTSCHRIFT

(11) **EP 1 087 856 B1**
(45) Veröffentlichungstag und Bekanntmachung des Hinweises auf die Patenterteilung: **15.01.2003**
(21) Anmeldenummer: 99932420.5
(22) Anmeldetag: 19.01.1999
(51) Int. Cl.: B23K 20/02, C22C 47/00, C22C 49/00

(54) **VERFAHREN ZUM HERSTELLEN VON LANGFASERVERSTÄRKTEN BAUTEILEN UND BAUTEIL**
METHOD FOR PRODUCING COMPONENTS REINFORCED BY LONG FIBERS AND COMPONENTS
PROCEDE POUR PRODUIRE DES COMPOSANTS RENFORCES PAR DES FIBRES LONGUES ET FIBRES

(30) Priorität: 30.01.1998 DE 19803743
(43) Veröffentlichungstag der Anmeldung: 04.04.2001
(73) Patentinhaber: DLR Deutsches Zentrum für Luft- und Raumfahrt e.V., 53175 Bonn (DE)
(72) Erfinder: Weber, Klaus, 53721 Siegburg (DE); Hüppen, Gerd, 53797 Lohmar (DE); Leucht, Rolf, 53842 Troisdorf (DE)
(74) Vertreter: Hilleringmann, Jochen, Dipl.-Ing.
(86) Internationale Anmeldenummer: EP9900303
(87) Internationale Veröffentlichungsnummer: WO99038641

(56) Entgegenhaltungen:
- DE-A- 3 049 424
- FR-A- 2 366 904
- GB-A- 2 220 595
- US-A- 5 184 769

## Beschreibung

Die Erfindung betrifft ein Verfahren zum Herstellen von langfaserverstärkten Bauteilen, insbesondere von Bauteilen, bei denen die Langfasern abschnittsweise aufgespreizt verlaufen.

Um Bauteilen bei geringem Gewicht größere Stabilität zu verleihen, ist es grundsätzlich bekannt, in die Bauteile Fasern einzubetten. Je nach Wahl des Materials für die Faser werden auch die Temperaturausdehnung verringert und die Temperaturfestigkeit des derart faserverstärkten Bauteils erhöht. Das Faserverstärkungsmaterial besteht zweckmäßigerweise aus mit einem Matrixmaterial beschichteten Fasern; dies hat den Vorteil, daß sich benachbarte Fasern nicht berühren sondern vielmehr von einem Material, dem Matrixmaterial umgeben sind. Vorzugsweise werden als Matrixmaterial Titanbasis-Legierungen verwendet, während die Faser selbst aus Siliziumcarbid (SiC) besteht.

Im Rahmen dieser Erfindung ist mit dem Begriff "Faser" eine Monofaser gemeint, die im Innern aus Fasermaterial besteht und außen eine Beschichtung aus Matrixmaterial aufweist. Das Fasermaterial im Innern kann eine zentrale Seele aufweisen. Das Fasermaterial kann eine umgebende Schutzschicht aufweisen, auf die das Matrixmaterial aufgebracht ist. Bei einer SiC-Faser besteht die Seele aus Kohlenstoff, das die Seele umgebende Fasermaterial aus SiC, die Schutzschicht aus im wesentlichen Kohlenstoff und das Matrixmaterial aus einer Titanbasis-Legierung.

Aus DE 40 21 547 A1 ist ein Verfahren zum Herstellen von faserverstärkten Bauteilen bekannt, bei dem ein Trägerkörper mit mindestens einer mit einem Matrixmaterial beschichteten Faser umwickelt wird und dieser Wickelkörper anschließend einem heißisostatischen Preßvorgang ausgesetzt wird. Beim heißisostatischen Pressen wird der Wickelkörper eingekapselt, d. h. von einer Kapsel umgeben, die Kapsel anschließend evakuiert und vakuumdicht verschlossen und danach die Kapsel erhitzt sowie allseitig einem hohen Druck ausgesetzt. Mit dem bekannten Verfahren lassen sich lediglich faserverstärkte Bauteile herstellen, bei denen die Faserverstärkung gewickelt ist. Oftmals ist es jedoch wünschenswert, daß das faserverstärkte Bauteil in einer Dimension hohe Stabilität aufweisen muß.

Aus DE 29 15 412 C2 ist ein Verfahren zum Herstellen eines Formkörpers aus faserverstärktem Metall-(Matrix-)Material bekannt. Die einzelnen Fasern sind in Röhrchen eingelassen, die das Matrixmaterial darstellen. Mehrere derartige Röhrchen werden in einen hülsenartigen Formkörper eingebracht, der bereits der Kontur des herzustellenden Bauteils entspricht. Der Formkörper, der an seinen beiden stirnseitigen Enden offen ist, wird durch Pfropfen aus geeignetem Material verschlossen, woraufhin der derart verschlossene Formkörper einem heißisostatischen Preßvorgang ausgesetzt wird. Anschließend werden die Pfropfen entfernt bzw. der Formkörper an seinen Enden anderweitig bearbeitet. Damit der Formkörper heißisostatisch gepreßt werden kann, bedarf es des luftdichten Abschlusses an seinen Enden, was verfahrenstechnisch aufwendig ist, da sich die Verhältnisse an den Enden des Formkörpers während des heißisostatischen Preßvorganges, bei dem eine Verdichtung stattfindet, verändern.

Ein weiteres Verfahren zur Herstellung faserverstärkter Verbundwerkstoffe ist aus DE 37 00 805 C2 bekannt. Auch bei diesem bekannten Verfahren werden die Fasern in einen Hohlkörper eingebracht, der bereits der Kontur des herzustellenden Bauteils entspricht. Über einen gasdichten Abschluß der Enden der Hohlform ist dabei nichts ausgesagt. Es ist lediglich ausgeführt, daß die Fasern und die zwischen ihnen eingebrachte Pulvermatrix so stark verdichtet werden, daß die Pulverpartikel sowohl untereinander als auch mit den Fasern verschweißen.

In den Patent Abstracts of Japan.C - 743, 1990, Vol. 14, No. 342, JP 2-12 58 24 A ist ein Verfahren zur Herstellung eines Formkörpers aus Kurzfasern für Verbundmaterialien beschrieben. Zur Herstellung wird eine Mischung aus Kurzfasern und einem Lösungsmittel in eine Form gegossen und anschließend mehreren Preßvorgängen unterzogen, wobei das Lösungsmittel austritt und die Kurzfasern ausgerichtet werden. Enthält das Werkstück Ausnehmungen, welche beim Pressen zusammengedrückt werden könnten, wird ein Einsatzkörper in die Ausnehmung eingebracht, der während des Pressens die Form des Werkstückes sicherstellt. Dieser Formkörper beeinflußt den Faserverlauf nicht, da es nicht möglich ist, mit einem flüssigen Lösungsmittel vermischte Kurzfasern in ihrem Verlauf bereichsweise aufzuspreizen.

Aus DE 43 35 557 C1 ist ein Verfahren zum Herstellen von langfaserverstärkten Bauteilen, die ein Matrixmaterial mit darin eingebetteten, mit Matrixmaterial beschichteten, im wesentlichen parallelen Langfasern aufweisen, bekannt, wobei bei dem Verfahren zunächst ein Werkstück aus einem mit dem Matrixmaterial der Fasern verträglichen Material, insbesondere aus dem Matrixmaterial mit wenigstens einem zumindest einseitig offenen Hohlraum, der im Querschnitt kleiner ist als der herzustellende Bauteil, erzeugt wird, der Hohlraum anschließend mit mit Matrixmaterial beschichteten Langfasern ausgefüllt wird, wobei die einzelnen Langfasern im wesentlichen parallel zueinander im Hohlraum angeordnet werden, das Werkstück mit den in seinem Hohlraum befindlichen Langfasern einem heißisostatischen Preßvorgang ausgesetzt wird und danach das Werkstück zur Herstellung des langfaserverstärkten Bauteils bearbeitet wird. Mit diesem Verfahren lassen sich nur langfaserverstärkte Bauteile herstellen, bei denen die Fasern im wesentlichen parallel verlaufen; ein aufgespreizter Verlauf der Fasern ist nicht vorgesehen.

Der Erfindung liegt die Aufgabe zugrunde, ein Verfahren zum Herstellen von langfaserverstärkten Bauteilen, die eine Verdickung aufweisen, anzugeben, bei dem auch im Bereich der Verdickung eine hohe Zugfestigkeit erzielt wird, wobei sich die Herstellung verfahrenstechnisch einfach gestaltet.

Diese Aufgabe wird erfindungsgemäß mit den Merkmalen des Anspruchs 1 bzw. 10 gelöst.

Ausgangspunkt des erfindungsgemäßen Verfahrens ist ein Werkstück aus pulvermetallurgischem Matrixmaterial, das zugleich das Beschichtungsmaterial der Langfasern ist; das Werkstück weist einen zumindest einseitig offenen Hohlraum auf, der im wesentlichen der Form des herzustellenden Bauteils entspricht und im Querschnitt kleiner ist als dieses. Der Hohlraum wird mit einzelnen beschichteten Langfasern dicht ausgefüllt, wobei die einzelnen Fasern innerhalb eines ersten Bereichs des Hohlraums im wesentlichen parallel zueinander angeordnet sind.

In einen zweiten Bereich des Hohlraums wird ein Aufspreizelement, vorzugsweise aus Matrixmaterial, eingebracht, so daß die Fasern innerhalb des zweiten Bereichs von der im wesentlichen parallel Ausrichtung derart umgelegt werden, daß sie aufgespreizt verlaufen. Mit dem Aufspreizelement werden die Fasern auf einfache Weise vollständig umgelegt.

Das derart präparierte Werkstück wird einem heißisostatischen Preßvorgang ausgesetzt, bei dem zunächst der Hohlraum evakuiert und verschlossen wird, das Werkstück gekapselt wird, wobei der dazu verwendete Behälter evakuiert und vakuumdicht verschlossen wird, und danach der Behälter auf hohe Temperaturen erhitzt und einem allseitigen hohen Druck ausgesetzt wird, so daß aufgrund der Temperatur und des Drucks der Duktilitätspunkt des Matrixmaterials erreicht und gegebenenfalls überschritten wird. Nach dem heißisostatischen Preßvorgang wird das aus dem Behälter entnommene Werkstück dann zur Herstellung des gewünschten Bauteils bearbeitet. Wenn der zweite Bereich des Hohlraums an einer Stirnseite des Bauteils liegt, wird vorteilhafterweise das Aufspreizelement zum Verschließen des Hohlraums eingesetzt.

Die Evakuierung des Hohlraums erfolgt vorzugsweise unter Temperaturerhöhung, um die Oberfläche der mit Matrixmaterial beschichteten Fasern und/oder des Werkstücks auszugasen. Diese Oberflächen können chemisch verunreinigt sein, z. B. durch Kleber, Sauer- und/oder Wasserstoff. Kleber kann z. B. eingesetzt werden, um die Langfasern beim Bestücken des Werkstücks an den Innenwänden des Hohlraums zu halten.

Das nach dem erfindungsgemäßen Verfahren hergestellte Bauteil ist im wesentlichen in einer Dimension faserverstärkt. Das Verfahren ist insbesondere von Vorteil bei der Herstellung von faserverstärkten Schrauben oder anderen ähnlichen Bauteilen, wie beispielsweise Turbinenschaufeln oder Ventilen für Verbrennungsmotoren, die insbesondere im Bereich ihrer Teller in axialer Richtung Belastungen ausgesetzt sind. Als Langfasern kommen dabei insbesondere Siliziumcarbid-Fasern in Frage, die mit einer Legierung auf Titanbasis beschichtet sind.

Die erhöhte Temperaturfestigkeit der nach dem erfindungsgemäßen Verfahren gefertigten Bauteile macht es möglich, bis zum mittleren Betriebstemperaturbereich des Bauteils auf eine Kühlung zu verzichten, in jedem Fall aber weniger als bei konventionellen Bauteilen kühlen zu müssen.

Nach dem erfindungsgemäßen Verfahren lassen sich auch partiell faserverstärkte Bauteile herstellen. Beispielsweise können mehrere Hohlräume in dem Werkstück ausgebildet sein, wobei das fertige Bauteil sämtliche Hohlräume umschließt. Es ist ebenfalls denkbar, daß der oder die Hohlräume mit jeweils einem oder mehreren Kernen aus vorzugsweise Matrixmaterial bestückt werden, um dann lediglich den verbleibenden "Ringraum" mit Langfasern zu bestücken. Ferner kann das Material des Kerns nach dem heißisostatischen Pressen wieder entfernt werden, um etwa im Falle eines nach dem erfindungsgemäßen Verfahren hergestellten Bauteils für dieses einen inneren Kühlraum zu schaffen.

Allgemein kann zum erfindungsgemäßen Verfahren gesagt werden, daß der Hohlraum im Werkstück derart ausgebildet und bemessen ist, daß das fertige Bauteil den - dann mit Langfasern und Matrixmaterial ausgefüllten - Hohlraum einschließt, also etwa eine den faserverstärkten Bereich umgebende Hülle bzw. Ummantelung aufweist.

Das den Hohlraum aufweisende Werkstück kann prinzipiell einstückig oder aber auch mehrteilig, insbesondere zweiteilig ausgebildet sein. Die zwei oder mehreren Teile des Werkstücks werden dann beim Befüllen des Hohlraums zusammengepaßt, wobei sie zwischen sich den mit Langfasermaterial zu befüllenden Raum bilden.

Zur Erhöhung des Füllungsgrades des zumindest einseitig offenen Hohlraums im Werkstück mit Langfasermaterial wird das Werkstück zweckmäßigerweise bei der Einführung des Langfasermaterials in Vibration versetzt. Wenn nötig kann das Matrixmaterial zusätzlich mit Pulver aus dem Matrixmaterial verdichtet werden. Hierbei wird zweckmäßigerweise Pulver der Korngröße von 10 bis 20 µm verwendet.

Zweckmäßigerweise wird das Werkstück vor dem Einbringen der Langfasern von Oberflächenschmutz befreit. Dies erfolgt vorzugsweise durch Ätzen des mit dem Hohlraum versehenen Werkstücks.

Vorzugsweise wird der Hohlraum im Werkstück durch Funkenerosion ausgearbeitet, aber auch "gepreßte" Werkstücke, in denen sich nach Entfernen eines Kerns, um den herum das Material des Werkstücks gepreßt worden ist, der Hohlraum bildet, sind verwendbar. Grundsätzlich sind auch noch andere Bearbeitungsverfahren für das Herstellen bzw. Ausarbeiten des Hohlraums darin möglich.

Nachfolgend wird anhand der Figuren ein Ausführungsbeispiel der Erfindung näher erläutert. Dabei zeigen die
- Fign. 1 und 2: die verschiedenen Stadien zum Herstellen einer langfaserverstärkten Schraube aus einer Legierung auf Titanbasis mit Siliziumcarbid-Langfasern,
- Fig. 3: den Verlauf der in dem Hohlraum befindlichen Langfasern und
- Fig. 4: das fertiggestellte Bauteil.

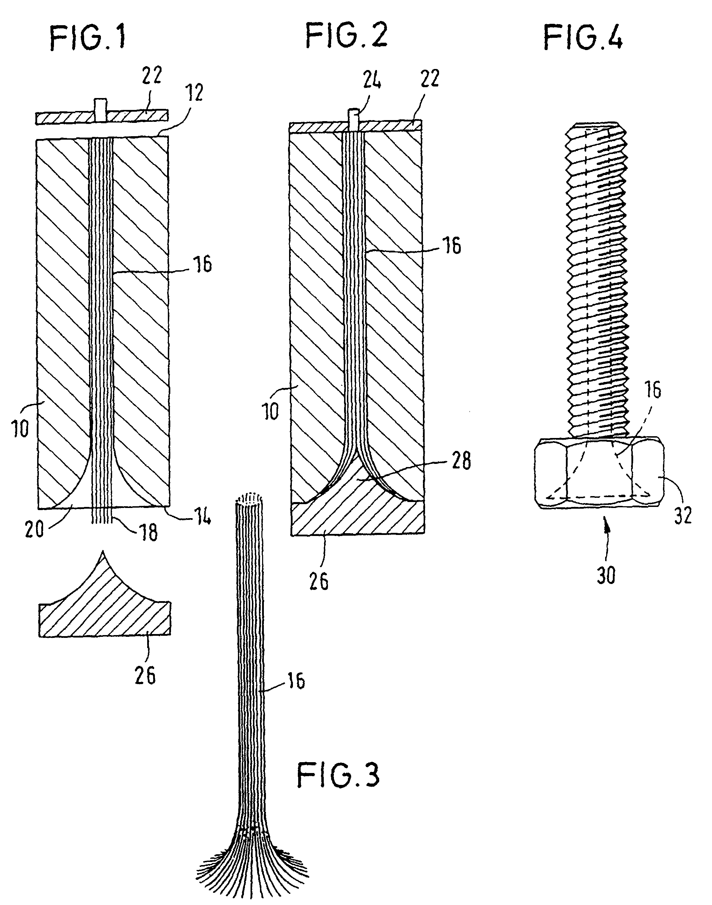

Ausgangspunkt ist ein im wesentlichen zylinder- oder quaderförmiges Werkstück 10 aus einer Titanbasis-Legierung. In dieses in Fig. 1 dargestelltes Werkstück 10 wird durch Funkenerosion ein an zwei Seiten, nämlich an der Oberseite 12 und an der Unterseite 14, offener durchgehender Hohlraum 16 ausgearbeitet, der im Querschnitt der gewünschten Schraubenform entspricht und kleiner ist als die herzustellende Schraube. Der Hohlraum 16 hat einen zylinderförmigen ersten Bereich und an seiner Unterseite 14 einen trichterförmig aufgeweiteten zweiten Bereich 20.

Nach Fertigstellung des Hohlraums 16 wird das Werkstück 10 geätzt, um die Hohlraum-Innenflächen zu reinigen. Im Anschluß daran wird der Hohlraum 16 mit Siliziumcarbid-Fasern 18 befüllt, die eine Beschichtung z. B. aus dem gleichen Material wie der Werkstück-Block 10 aufweisen. Bei den Fasern 18 handelt es sich um Langfasern, die sich über die gesamte Höhe des Werkstücks 10 zwischen dessen Ober- und Unterseite 12,14 erstrecken. Die Länge der Fasern 18 ist derart bemessen, daß sie bei bündiger Anlage an der Oberseite 12 des Werkstücks 10 über die Unterseite 14 überstehen, so daß die Fasern 18 auch bei Aufspreizung die Wandung des zweiten Bereichs 20 vollständig bedecken.

Die Langfasern 18 sind, wie in Fig. 1 angedeutet, in paralleler Ausrichtung relativ zueinander in dem Hohlraum 16 untergebracht. Der Füllungsgrad des Hohlraums 16 mit Langfasern 18 wird durch Vibrationsrütteln des Werkstücks 10 während der Befüllung erhöht. Zusätzlich kann zur Verdichtung Titanbasis-Legierungs-Pulver mit einer Korngröße von ca. 10 bis 20 µm in den Hohlraum 16 eingebracht werden.

Das derart präparierte Werkstück 10 wird anschließend gemäß Fig. 2 zur Vorbereitung auf einen heißisostatischen Preßvorgang abgedeckt. An der Oberseite 12 wird der Hohlraum 16 mit einer Platte 22 verschlossen, die ein mit dem Hohlraum 16 kommunizierendes Ventil 24 zur Evakuierung des Hohlraums 16 aufweist. An der Unterseite 14 wird der Hohlraum 16 mit einem Aufspreizelement 26 verschlossen. Das Aufspreizelement 26 hat einen mittig angeordneten Dorn 28, dessen Mantelfläche konkav ist und stetig, d. h. ohne Knick verläuft. Der Dorn 28 greift in den trichterförmigen aufgeweiteten zweiten Bereich 20 derart ein, daß die Fasern 18 an die Wandung des aufgeweiteten Bereichs 20 angedrückt werden. Der freie Raum zwischen dem Aufspreizelement 26 und der Wandung des zweiten Bereichs 20, in dem die Fasern 16 aufgespreizt verlaufen, wird in Richtung der Außenfläche des Werkstücks 10 schmaler. So wird sichergestellt, daß dieser freie Raum komplett mit Fasern 16 ausgefüllt ist, die nach außen hin immer ausgedünnter verlaufen; dies ist beispielhaft in Fig. 3 dargestellt.

Der trichterförmige zweite Bereich 20 und das Aufspreizelement 26 sind in ihrer Breite derart bemessen, daß im Randbereich des Werkstücks 10 und das Aufspreizelement 26 direkt aufeinanderliegen, d. h. ohne Vorhandensein von Fasern 18 an dieser Kontaktstelle. Dadurch wird sichergestellt, daß der Faserkern des fertiggestellten Bauteils an allen Stellen von dem Matrixmaterial umgeben ist. Die Platte 22 und das Aufspreizelement 26 bestehen aus der gleichen Titanbasis-Legierung wie das Werkstück 10 und die Beschichtung der Langfasern 18.

Das derart an den offenen Seiten seines Hohlraums 16 verschlossene Werkstück 10 wird dann gekapselt, indem es in einen nicht dargestellten V2A-Behälter eingebracht wird. Dieser Behälter wird auf ca. 10⁻⁷ mbar bei einer Temperatur von ca. 500 °C evakuiert und danach vakuumdicht verschlossen. Man kann auf eine Kapselung auch insoweit verzichten, als der Hohlraum des Werkstücks entgast und gasdicht verschlossen ist. Insoweit stellt das Werkstück selbst die Kapselung dar. Anschließend erfolgt der heißisostatische Preßvorgang, bei dem durch hohe Temperatur und allseitige Druckeinwirkung der Duktilitätspunkt des Matrixmaterials, also der Titanbasis-Legierung, erreicht und zweckmäßigerweise überschritten wird.

Nach dem heißisostatischen Preßvorgang wird das Werkstück 10 durch beispielsweise eine CNC-Maschine bearbeitet, um die Geometrie der Schraube 30 gemäß Fig. 4 zu erhalten. Diese Schraube 30 zeichnet sich durch einen Umhüllung aus Matrixmaterial und einem faserverstärkten Kern aus, der aus den im Matrixmaterial eingebetteten Langfasern besteht. Die Schraube 30 wird derart aus dem Werkstück 10 herausgearbeitet, daß der aufgeweitete zweite Bereich innerhalb des Schraubenkopfes 32 liegt, wodurch die Zugfestigkeit der Schraube 30 in optimaler Weise erhöht wird.

## Patentansprüche

1. Verfahren zum Herstellen von langfaserverstärkten Bauteilen (30), die ein pulvermetallurgisches Matrixmaterial mit darin eingebetteten, mit Matrixmaterial beschichteten und im wesentlichen parallel verlaufenden Langfasern (18) aufweisen, wobei die Langfasern (18) innerhalb eines Aufspreizabschnitts (32) des Bauteils (30) aufgespreizt verlaufen, bei dem
- ein Werkstück (10) aus insbesondere Matrixmaterial mit mindestens einem zumindest einseitig offenen Hohlraum (16) erzeugt wird, der im Querschnitt kleiner ist als das herzustellende Bauteil (30) und der einen ersten Bereich, in dem die einzelnen Langfasern (18) im wesentlichen parallel zueinander verlaufen, und einen zweiten Bereich (20) aufweist, in dem die Langfasern (18) aufgespreizt verlaufen,
- der Hohlraum (16) mit den Langfasern (18) ausgefüllt wird,
- ein Aufspreizelement (26) insbesondere aus Matrixmaterial in den Hohlraum (16) gebracht wird, so daß die Langfasern (18) in dem zweiten Bereich (20) zur Bildung des Aufspreizabschnitts (32) gespreizt verlaufen,
- das Werkstück (10) einem heißisostatischen Preßvorgang ausgesetzt wird und
- danach das Werkstück (10) zur Erzeugung der Außenkontur des langfaserverstärkten Bauteils (30) bearbeitet wird.

2. Verfahren nach Anspruch 1, **dadurch gekennzeichnet, daß** der zweite Bereich (20) an einem Ende des Hohlraums (16) liegt und daß das Aufspreizelement (26) den Hohlraum (16) verschließt.

3. Verfahren nach Anspruch 1 oder 2, **dadurch gekennzeichnet, daß** der zweite Bereich (20) trichterförmig ausgebildet ist und daß das Aufspreizelement (26) einen zentralen Dorn (28) aufweist.

4. Verfahren nach Anspruch 3, **dadurch gekennzeichnet, daß** der Dorn (28) ein Kegeldorn ist, dessen Mantelfläche konkav ist.

5. Verfahren nach einem der Ansprüche 1 bis 4, **dadurch gekennzeichnet, daß** das Werkstück (10) bei der Einführung von Langfasern (18) in den mindestens einen Hohlraum (16) in Vibrationen versetzt wird.

6. Verfahren nach einem der Ansprüche 1 bis 5, **dadurch gekennzeichnet, daß** in den mindestens einen Hohlraum (16) des Werkstücks (10) zusätzlich Pulver aus Matrixmaterial eingebracht wird.

7. Verfahren nach einem der Ansprüche 1 bis 6, **dadurch gekennzeichnet, daß** das Werkstück (10) vor dem Einbringen der Langfasern (18) in den mindestens einen Hohlraum (16) geätzt wird.

8. Verfahren nach einem der Ansprüche 1 bis 7, **dadurch gekennzeichnet, daß** in den mindestens einen Hohlraum (16) mindestens ein Kern aus insbesondere Matrixmaterial eingesetzt wird, wobei der mindestens eine Kern im Querschnitt kleiner ist als der mindestens eine Hohlraum (16) und der verbleibende Raum mit Langfasern (18) ausgefüllt wird.

9. Verfahren nach einem der Ansprüche 1 bis 8, **dadurch gekennzeichnet, daß** der Hohlraum (16) in dem Werkstück (10) ausgearbeitet wird, insbesondere durch Funkenerosion.

10. Heißisostatisch gepreßtes Bauteil mit einem erweiterten Teilabschnitt (32), sowie mit in pulvermetallurgisches Matrixmaterial eingebetteten, im wesentlichen parallelen Langfasern (18), **dadurch gekennzeichnet, daß** die Langfasern (18) im erweiterten Teilabschnitt (32) aufgespreizt verlaufen.

11. Verwendung eines Verfahrens nach einem der Ansprüche 1 bis 9 zum Herstellen einer langfaserverstärkten Schraube (30).

## Claims

1. A method for fabricating long-fiber-reinforced components (30) comprising a powder-metallurgic matrix material with embedded, substantially parallel long fibers (18) coated with matrix material, wherein the long fibers (18) extend spread apart within a spread section (32) of the component (30), wherein
- a workpiece (10), particularly of matrix material, with at least one cavity (16) being open at least at one side and having a smaller cross section than the component (24) to be fabricated, is produced, said cavity (16) having a first portion, in which the individual long fibers (18) extend substantially parallel to each other, and a second portion (20) in which the long fibers (18) extend spread apart,
- the cavity (16) is filled with long fibers (18),
- a spreading element (26), particularly of matrix material, is provided in the cavity (16) so that the long fibers (18) extend spread apart in the second portion (20) to form the spread section (32),
- the workpiece (10) is subjected to a hot isostatic pressing process, and
- thereafter, the workpiece (10) is worked to produce the outer contour of the long-fiber-reinforced component (30).

2. The method of claim 1, **characterized in that** the second portion (20) is located at one end of the cavity (16) and the spreading element (26) closes the cavity (16).

3. The method of claim 1 or 2, **characterized in that** the second portion (20) is funnel-shaped and the spreading element (26) has a central mandrel (28).

4. The method of claim 3, **characterized in that** the mandrel (28) is a conic mandrel with a concave outer surface.

5. The method according to one of claims 1 to 5, **characterized in that** the workpiece (10) is vibrated on introduction of long fibers (18) into the at least one cavity (16).

6. The method according to one of claims 1 to 6, **characterized in that** powder of matrix material is additionally introduced into the at least one cavity (16) of the workpiece (10).

7. The method according to claims 1 to 6, **characterized in that** the workpiece (10) is etched before the long fibers (18) are introduced into the at least one cavity (16).

8. The method according to one of claims 1 to 7, **characterized in that** at least one core, particularly of matrix material, is inserted into the at least one cavity (16), the at least one core having a smaller cross section than the at least one cavity (16) and the remaining space being filled with long fibers (18).

9. The method according to claims 1 to 8, **characterized in that** the cavity (16) in the workpiece (10) is relieved, particularly by electrical erosion.

10. Hot-isostatically pressed component with an enlarged section (32) as well as with substantially parallel long fibers (18) embedded in powder-metallurgic matrix material, **characterized in that** the long fibers (18) extend spread apart in said section (32).

11. Use of a method according to one of claims 1 to 9 for fabricating a long-fiber-reinforced turbine blade (30).

## Revendications

1. Procédé de fabrication de composants (30) renforcés par des fibres longues, présentant un matériau de matrice faisant appel à la métallurgie des poudres, avec des fibres longues (18) y étant incorporées, revêtues par du matériau de matrice et s'étendant sensiblement parallèlement, les fibres longues (18) s'étendant en s'écartant à l'intérieur d'un tronçon d'écartement (32) du composant (30), pour lequel
◆ une pièce (10), en particulier en matériau de matrice, est produite avec au moins un espace creux ouvert au moins sur un côté, qui a une section transversale plus petite que celle du composant (30) à fabriquer et qui présente une première zone dans laquelle les différentes fibres longues (18) s'étendent sensiblement parallèlement les unes aux autres, et présente une deuxième zone (20) dans laquelle les fibres longues (18) ont une allure allant en s'écartant,
◆ l'espace creux (16) est rempli des fibres longues (18),
◆ un élément d'écartement (26), en particulier en matériau de matrice, est placé dans l'espace creux (16), de manière que les fibres longues (18) aint une allure écartée dans la deuxième zone (20) afin de former le tronçon d'écartement (32),
◆ la pièce (10) est exposée à un processus de pressage isostatique à chaud, et
◆ ensuite la pièce (10) est travaillée pour produire le contour extérieur du composant (20) renforcé par des fibres longues.

2. Procédé selon la revendication 1, **caractérisé en ce que** la deuxième zone (20) est située à une extrémité de l'espace creux (16) et l'élément d'écartement (26) ferme l'espace creux (16).

3. Procédé selon la revendication 1 ou 2, **caractérisé en ce que** la deuxième zone (20) est conformée en entonnoir et **en ce que** l'élément d'écartement (26) présente un mandrin (28) central.

4. Procédé selon la revendication 3, caractérisé en ce le mandrin (28) est un mandrin conique dont la surface d'enveloppe est concave.

5. Procédé selon l'une des revendications 1 à 4, **caractérisé en ce que** la pièce (10) est mise en vibration lors de l'insertion des fibres longues (18) dans l'au moins un espace creux (16).

6. Procédé selon l'une des revendications 1 à 5, **caractérisé en ce que**, en plus, de la poudre formée de matériau de matrice est introduite dans l'au moins un espace creux (16) de la pièce (10).

7. Procédé selon l'une des revendications 1 à 6, **caractérisé en ce que** la pièce (10) est attaquée chimiquement avant l'insertion des fibres longues (18) dans l'au moins un espace creux (16).

8. Procédé selon l'une des revendications 1 à 7, **caractérisé en ce que** dans l'au moins un espace creux (16) est inséré au moins un noyau, en particulier en matériau de matrice, l'au moins un noyau ayant une section transversale plus petite que l'au moins un espace creux (16) et l'espace restant étant rempli par des fibres longues (18).

9. Procédé selon l'une des revendications 1 à 8, **caractérisé en ce que** l'espace creux (16) est creusé dans la pièce (10) en particulier par électroérosion.

10. Composant obtenu par pressage hydrostatique à chaud, avec un tronçon partiel (32) élargi, ainsi qu'avec des fibres longues (18) sensiblement parallèles, incorporées dans un matériau de matrice faisant appel à la métallurgie des poudres, **caractérisé en ce que** les fibres longues (18) ont une allure allant en s'écartant, dans le tronçon partiel (32) élargi.

11. Utilisation d'un procédé selon l'une des revendications 1 à 9 pour la fabrication d'une vis (30) renforcée par des fibres longues.
